# EUROPÄISCHE PATENTSCHRIFT

(11) **EP 0 456 051 B1**
(45) Veröffentlichungstag und Bekanntmachung des Hinweises auf die Patenterteilung: **15.11.1995**
(21) Anmeldenummer: 91106769.2
(22) Anmeldetag: 26.04.1991
(51) Int. Cl.: D06F 95/00

(54) **Verfahren und Vorrichtung zum Zuführen von Bekleidungsstücken zu einer Behandlungseinrichtung, insbesondere einem Faltautomaten**
Method and device for delivering items of clothing to a handling apparatus, particularly an automatic folding machine
Procédé et dispositif d'amenée de pièces de linge à un appareil de traitement, notamment un dispositif automatique de pliage

(30) Priorität: 05.05.1990 DE 4014425
(43) Veröffentlichungstag der Anmeldung: 13.11.1991
(73) Patentinhaber: HERBERT KANNEGIESSER GMBH + CO., D-32602 Vlotho (DE)
(72) Erfinder: Wolf, Jürgen, W-4900 Herford (DE)
(74) Vertreter: Möller, Friedrich, Dipl.-Ing.

(56) Entgegenhaltungen:
- EP-A- 0 301 476
- DE-U- 8 707 554
- GB-A- 2 079 708

## Beschreibung

Die Erfindung betrifft ein Verfahren zum Zuführen von auf Transportbügeln hängenden Bekleidungsstücken zu einer Behandlungseinrichtung, insbesondere einem Faltautomaten, gemäß dem Oberbegriff des Anspruchs 1. Des weiteren betrifft die Erfindung eine Vorrichtung gemäß dem Oberbegriff des Anspruchs 10.

Bekleidungsstücke werden in Wäscherei- oder Konfektionsbetrieben üblicherweise an ein- und ausklappbaren Transportbügeln hängend längs einer Förderstrecke entsprechenden Behandlungseinrichtungen, insbesondere einem Faltautomaten, zugeführt. Die Bekleidungsstücke werden von mindestens einer Bedienungsperson manuell auf die Transportbügel aufgehängt. Dieses geschieht aus ergonomischen Gründen, beispielsweise zur Erleichterung des Zuknöpfens knöpfbarer Bekleidungsstücke, stets so, daß die Vorderseite des Bekleidungsstücks zur Bedienungsperson weist. Demzufolge können die Bekleidungsstücke nur in einer bestimmten Relativanordnung an die entsprechende Behandlungseinrichtung übergeben werden. Derartiges ist aus der EP-A-301476 bekannt. Gleichwohl besteht vor allem beim Falten der Bekleidungsstücke auf Faltautomaten die Forderung, die Bekleidungsstücke je nach ihrer Art entweder mit der Vorderseite oder der Rückseite auf eine Arbeitsplatte des Faltautomaten aufzulegen.

Wenn die Bekleidungsstücke alternativ mit der Vorder- oder Rückseite auf die Arbeitsplatte des Faltautomaten aufgelegt werden sollen, ist es beim Verfahren und der Vorrichtung der EP-A-301476 erforderlich, daß von einer weiteren Bedienungsperson die Bekleidungsstücke mit entsprechender Vororientierung manuell auf die Arbeitsplatte des Faltautomaten aufgelegt werden. Dazu ist ein erhöhter Personalaufwand erforderlich.

Hiervon ausgehend liegt der Erfindung die Aufgabe zugrunde, ein Verfahren und eine Vorrichtung zum Zuführen von Bekleidungsstücken zu einer Behandlungseinrichtung, insbesondere einem Faltautomaten, zu schaffen, womit ohne Einflußnahme durch die Bedienungsperson die Bekleidungsstücke in unterschiedlichen Relativpositionen der Behandlungseinrichtung, insbesondere der Arbeitsplatte eines Faltautomaten, zuführbar sind.

Zur Lösung dieser Aufgabe weist das erfindungsgemäße Verfahren die Merkmale des Anspruchs 1 auf. Durch das Drehen der Transportbügel in alternative Relativpositionen ist es möglich, die Bekleidungsstücke in vorbestimmter Alternativanordnung, also entweder mit der Vorderseite oder mit der Rückseite, der Arbeitsplatte des Faltautomaten oder dergleichen ohne manuelle Eingriffe zuzuführen. Dabei brauchen sämtliche Bekleidungsstücke - unabhängig davon, wie sie dem Faltautomaten zugeführt werden sollen - in einfacher Weise nur mit zur Bedienungsperson weisender Vorderseite auf die Transportbügel aufgehängt zu werden. Gleichwohl ermöglicht die bedarfsweise Drehung der Transportbügel eine Zufuhr der Bekleidungsstücke zum Faltautomaten oder dergleichen in alternativen Relativpositionen.

Die vor der Übergabe an die Behandlungseinrichtung gedrehten Transportbügel werden hinter der Behandlungseinrichtung wieder entgegengesetzt gedreht. Dadurch gelangen die leeren Transportbügel stets in der gleichen Relativposition zum Aufhängen neuer Bekleidungsstücke zur Bedienungsperson zurück. Auf diese Weise wird bei unterschiedlich ausgebildeten Transportbügeln, insbesondere mit seitlich versetzten Aufhängehaken, ein reproduzierbarer Durchlauf der Transportbügel durch die Förderstrecke gewährleistet.

Gemäß einer bevorzugten Weiterbildung des erfindungsgemäßen Verfahrens wird nach dem Auflegen und mindestens teilweisen Fixieren des jeweiligen Bekleidungsstücks auf der Behandlungseinrichtung der entsprechende Transportbügel vor dem Einklappen der Bügelarme zum Herausziehen des Transportbügels aus dem Bekleidungsstück etwas abgesenkt. Dadurch wird erreicht, daß das Bekleidungsstück, nämlich die Schulterpartien desselben, keine Belastung mehr auf die Bügelarme des Transportbügels ausübt. Die Bügelarme werden somit entlastet, wodurch sich das Arretierungsorgan zum Halten der Bügelarme in der ausgeklappten Stellung leichter zum Einklappen der Bügelarme betätigen läßt. Außerdem wird verhindert, daß das Bekleidungsstück durch die Transportbügel vorgespannt ist, was beim Einklappen der Bügelarme zu einer schlagartigen Entspannung des Bekleidungsstücks und - daraus resultierend - zu einem Verzug des Bekleidungsstücks führen könnte.

Nach einem weiteren Vorschlag der Erfindung wird der Transportbügel nach dem Auflegen und Fixieren des Bekleidungsstücks auf die Arbeitsebene der Behandlungseinrichtung, und zwar vorzugsweise nach dem Einklappen der Bügelarme, aus der Arbeitsebene leicht herausbewegt, so daß die Längsrichtung des eingeklappten Transportbügels schräg zur Längsrichtung der Arbeitsebene verläuft. Das hat zur Folge, daß der Transportbügel sich einerseits mit den freien Enden seiner Bügelarme auf der auf der Arbeitsebene liegenden und fixierten Seite des Bekleidungsstücks abstützt und andererseits die gegenüberliegende Seite des Bekleidungsstücks von der Arbeitsebene durch den von dieser abgekippten Transportbügel weggebewegt wird und dadurch nicht mehr auf der Arbeitsebene fixiert ist. Auf diese Weise läßt sich der eingeklappte Transportbügel ohne einen Faltenwurf leicht aus dem Bekleidungsstück herausziehen.

Eine Vorrichtung zur Lösung der eingangs genannten Aufgabe weist die Merkmale des Anspruchs 10 auf. Durch den Aufbau des Fördersystems aus mindestens einem Vorförderer und mehreren Zuförderern wird erreicht, daß die Transportbügel mit den darauf hängenden Bekleidungsstücken auf dem Weg zur Übergabe an die Behandlungseinrichtung unterschiedliche Förderstrecken durchlaufen. Diese können dazu benutzt werden, die Transportbügel mit den Bekleidungsstücken so umzuorientieren, daß sie in der gewünschten Relativposition an die Arbeitsplatte des Faltautomaten übergebbar sind. Durch die Zuordnung mehrerer Zuförderer zum Vorförderer wird eine Weiche zur Verteilung der Transportbügel vom Vorförderer auf unterschiedliche Zuförderer geschaffen. Zweckmäßigerweise finden zwei Zuförderer Verwendung, von denen ein Zuförderer die Transportbügel unverdreht an den Übergabeförderer weiterleitet; während auf dem anderen Zuförderer erst nach einer etwa 180°-Drehung die Transportbügel an den Übergabeförderer weitergeleitet werden. Dieses ermöglicht in besonders einfacher Weise eine Zufuhr der auf den Transportbügel hängenden Bekleidungsstücke in bestimmter Relativanordnung zum Faltautomaten. Die Relativlage der Bekleidungsstücke bei der Zufuhr zum Faltautomaten ist nämlich davon abhängig, über welchen Zuförderer die Transportbügel mit den Bekleidungsstücken zum Übergabeförderer gelangen. Dieser Weg ist abhängig vom Ort der Übergabe der Transportbügel vom Vorförderer auf den entsprechenden Zuförderer.

Am Vorförderer läßt sich in besonders einfacher Weise bestimmen, in welcher Relativanordnung die Bekleidungsstücke dem Faltautomaten zuzuführen sind, indem durch eine entsprechende Codierung an den Bekleidungsstücken selbst oder den Transportbügeln eine Übergabe derselben an den einen oder anderen Zuförderer erfolgt. Hiervon hängt es ab, ob die Bekleidungsstücke mit der Vorder- oder Rückseite auf die Arbeitsplatte des Faltautomaten oder dergleichen aufgelegt werden sollen.

Gemäß einer bevorzugten Ausführungsform der Vorrichtung erfolgt ein Drehen der Transportbügel mit den Bekleidungsstücken durch eine Wendeschleife, in welcher der entsprechende Zuförderer vorzugsweise über eine annähernd 180°-Schleife geführt ist. Es erfolgt dadurch auf dem jeweiligen Zuförderer ein zwangsweises Drehen der Bekleidungsstücke, wobei die einfache schleifenförmige Ausbildung der Wendeschleife zu einem zuverlässigen Drehen führt.

Der beiden Zuförderern nachgeordnete Übergabeförderer zum Zuführen der Transportbügel mit den Bekleidungsstücken zur Arbeitsplatte des Faltautomaten oder dergleichen ist als hin- und hergehender (intermittierender) Förderer ausgebildet. Damit dient der Übergabeförderer zur Vereinzelung von üblicherweise auf den Zuförderern und gegebenenfalls auch dem Vorförderer ohne definierten Abstand geförderten Transportbügeln mit daran hängenden Bekleidungsstücken. Dem Faltautomaten werden dadurch Bekleidungsstücke unter Anpassung an seinen Arbeitstakt übergeben. Fehler in der Zuführung der Bekleidungsstücke zum Faltautomaten werden so zuverlässig vermieden.

Gemäß einer bevorzugten Weiterbildung der Erfindung verläuft eine geradlinige Förderstrecke des Übergabeförderers unter einem spitzen Winkel zur Arbeitsplatte des Faltautomaten, und zwar vorzugsweise unter einem Winkel von 70 bis 80°. Dadurch wird erreicht, daß das Bekleidungsstück während der Übergabe auf die Arbeitsplatte zusätzlich zur Bewegung in Längsrichtung des Übergabeförderers geringfügig auf der Arbeitsplatte hochgezogen wird. Dadurch wird das Bekleidungsstück während der Übergabe etwas gestreckt und eine Faltenbildung vermieden bzw. dieser entgegengewirkt.

Die erfindungsgemäße Vorrichtung verfügt weiterhin über ein Abfördersystem für leere Transportbügel, das diese von der Behandlungseinrichtung zum Vorförderer zurückführt. Dieses setzt sich zweckmäßigerweise aus einem der Behandlungseinrichtung nachgeordneten Abförderer, einem Zwischenförderer, einem Wendeförderer und einem Verbindungsförderer zum Vorförderer zusammen. Der Wendeförderer ist zweckmäßigerweise vor einem Kreuzungspunkt zwischen dem Abförderer und dem Zwischenförderer angeordnet. Es werden so die zurückzudrehenden (leeren) Transportbügel vor dem normalen Weitertransport an den Verbindungsförderer aus dem Förderstrom ausgesondert und über den Wendeförderer geführt.

Der Wendeförderer ist vorzugsweise als eine um den Kreuzungspunkt zwischen dem Abförderer und dem vorzugsweise quer (unter 90°) hierzu verlaufenden Zwischenförderer herumgeführte Schleife, nämlich vorzugsweise eine 180°-Schleife, ausgebildet. Dadurch erreichen diejenigen Transportbügel, die den Wendeförderer durchlaufen haben, beim Erreichen des anschließenden Verbindungsförderers eine Position, die derjenigen der übrigen (leeren) Transportbügel entspricht, die vor der Zufuhr zum Faltautomaten nicht verdreht worden sind. Somit verfügen alle (leeren) Transportbügel vor der Übergabe vom Verbindungsförderer auf den Vorförderer, vorzugsweise vor einer Bügelspreizeinrichtung, über eine gleiche Orientierung, d. h. die seitlich versetzten Aufhängehaken der Transportbügel weisen alle zur gleichen Seite.

Weitere vorteilhafte Ausbildungen der Vorrichtung sind den Unteransprüchen zu entnehmen.

Bevorzugte Ausführungsbeispiele der Vorrichtung und das hiermit durchzuführende Verfahren werden nachfolgend anhand der Zeichnung näher erläutert. In dieser zeigen:
- Fig. 1: einen schematisch dargestellten Grundriß der Vorrichtung mit einem Zu- und Abfördersystem und einem schematisch dargestellten Faltautomaten,
- Fig. 2: einen Grundriß einer alternativen Vorrichtung in einer Darstellung gemäß der Fig. 1,
- Fig. 3: eine Seitenansicht des Faltautomaten mit einem zu ihn führenden Übergabeförderer,
- Fig. 4: eine vergrößert dargestellte Einzelheit IV im Bereich des Übergangs des Übergabeförderers von den Zuförderern,
- Fig. 5: eine vergrößert dargestellte Einzelheit V im Bereich eines zum Faltautomaten weisenden Endes des Übergabeförderers,
- Fig. 6: eine Seitenansicht eines Abförderers leerer Transportbügel,
- Fig. 7: eine Draufsicht auf den Abförderer gemäß der Fig. 6,
- Fig. 8: einen vergrößert dargestellten Querschnitt VIII-VIII durch einen Haltekopf für die leeren Kleiderbügel am Abförderer,

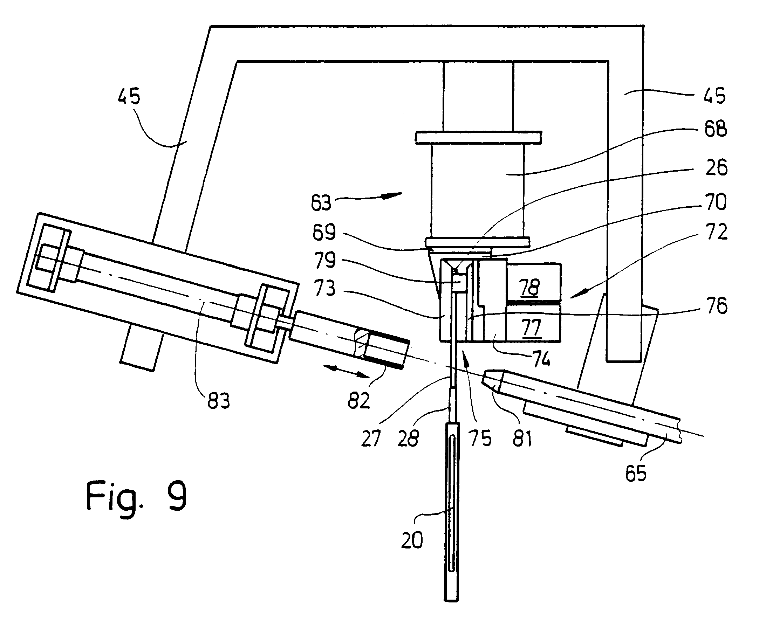

- Fig. 9: einen Querschnitt IX-IX durch den Abförderer im Bereich eines Einlaufbereichs eines Wendeförderers,
- Fig. 10: eine Vorderansicht einer Bügelspreizeinrichtung,
- Fig. 11: eine Seitenansicht der Bügelspreizeinrichtung gemäß der Fig. 10, und
- Fig. 12: eine schematische Seitenansicht analog zur Fig. 3 zur Darstellung der Bewegungsabläufe des Übergabeförderers.

Die hier gezeigte Vorrichtung dient zum Zuführen von auf Transportbügeln 20 hängenden, nicht gezeigten Bekleidungsstücken zu einem andeutungsweise dargestellten Faltautomaten 21 und zum Abführen leerer Transportbügel 20 vom Faltautomaten 21.

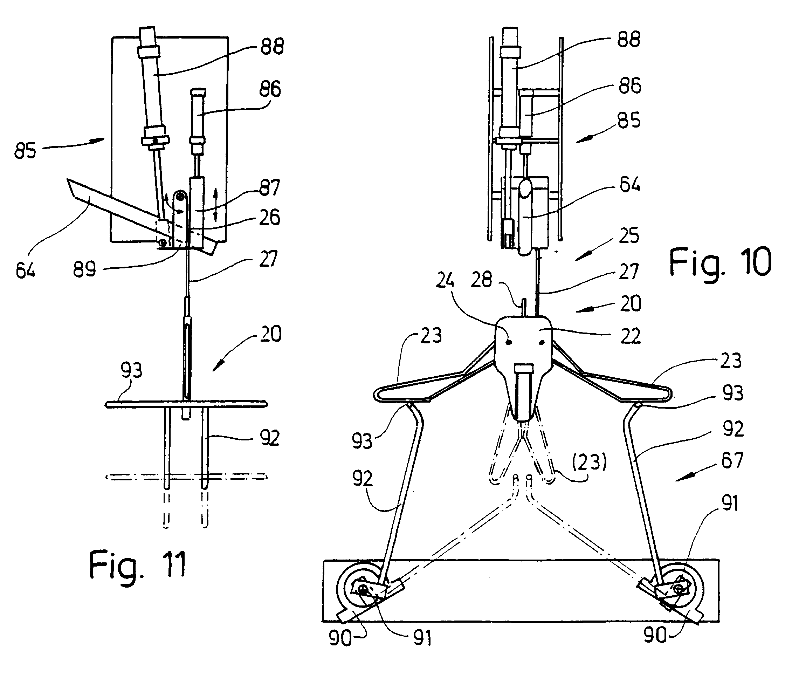

Die Transportbügel 20 verfügen über ein gehäuseartiges Hakenteil 22, an dem zwei gegenüberliegende Bügelarme 23 um jeweils einen Drehpunkt 24 ein- und ausklappbar gelagert sind. Die Fig. 10 zeigt den Transportbügel 20 mit ausgeklappten Bügelarmen 23 und - strichpunktliniert dargestellten - eingeklappten Bügelarmen 23. An der Oberseite des gehäuseartigen Hakenteils 22 verfügt der Transportbügel 20 über einen Aufhängehaken 25. Dieser setzt sich zusammen aus einem etwa U-förmig gebogenen Haken 26 und einem an einer Seite desselben angeordneten geradlinigen (vertikalen) Verbindungsabschnitt 27. Letzterer ist außermittig mit dem gehäuseartigen Hakenteil 22 verbunden. Der Haken 26 befindet sich etwa mittig über dem gehäuseartigen Hakenteil 22 und dient zum Anhängen des Transportbügels 20 an ein Tragorgan des Zu- bzw. Abfördersystems. Aus dem gehäuseartigen Hakenteil 22 ragt nach außen ein Endbereich eines Auslösestifts 28 hervor. Durch ein Hineindrücken des Auslösestifts 28 in das gehäuseartige Hakenteil 22 lassen sich die ausgeklappten Bügelarme 23 entriegeln zum selbsttätigen Einklappen der Bügelarme 23 in die in der Fig. 10 (strichpunktliniert) dargestellte eingeklappte Stellung des leeren Transportbügels 20.

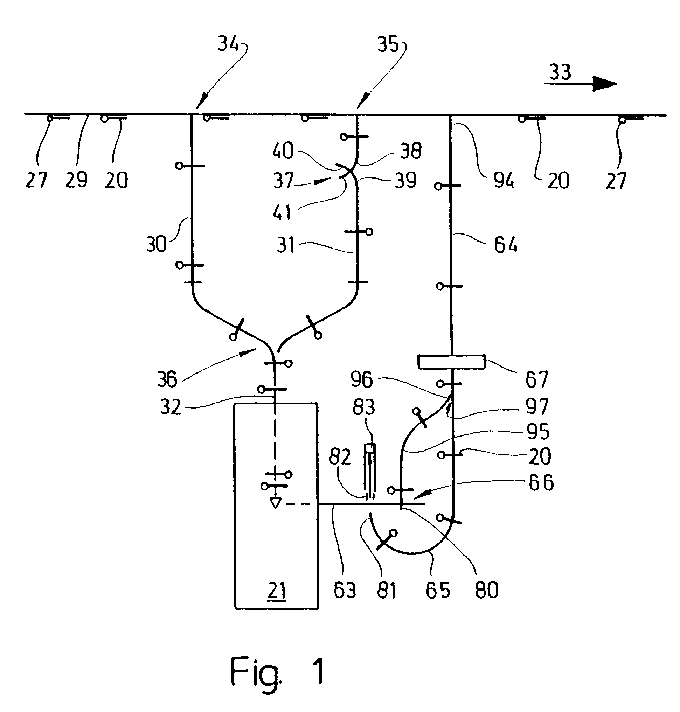

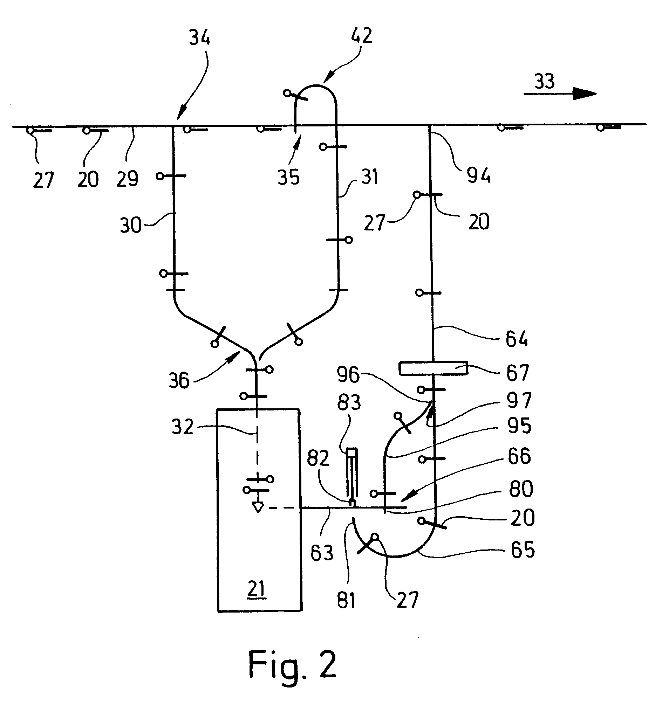

Das Zufördersystem gemäß der Fig. 1 und 2 setzt sich aus mehreren Teilförderern, nämlich im wesentlichen einem Vorförderer 29, zwei Zuförderern 30 und 31 sowie einem Übergabeförderer 32, zusammen. Über den Vorförderer 29 sind die ausgeklappten Transportbügel 20 mit daran hängenden Bekleidungsstücken alternativ einem der beiden Zuförderer 30 bzw. 31 zuführbar. Das Aufhängen der Bekleidungsstücke auf die Transportbügel 20 kann in einem vor den beiden Zuförderern 30, 31 liegenden Bereich des Vorförderers 29, aber auch einer dem Vorförderer 29 vorgeordneten Beschickungsstation, erfolgen. Der Vorförderer 29 kann in an sich bekannter Weise ausgebildet sein. Vorzugsweise ist er als ein etwa horizontal verlaufender Schleppförderer mit nicht dargestellten Tragorganen zum Anhängen des Hakens 26 jeweils eines Transportbügels 20 ausgebildet.

Die beiden Zuförderer 30 und 31 beginnen an in Förderrichtung (Pfeil 33) des Vorförderers 29 aufeinanderfolgenden Übergabepunkten 34, 35 am Vorförderer 29. Die Enden der beiden Zuförderer 30, 31 laufen an einer Verbindungsstelle 36 zusammen, derart, daß die vom zweiten Zuförderer 31 kommenden Transportbügel 20 mit daran hängenden Bekleidungsstücken im Bereich der Verbindungsstelle 36 auf den ersten Zuförderer 30 rutschen. Nach der Verbindungsstelle 36 wird nur noch der erste Zuförderer 30 weitergeführt zum Übergabeförderer 32.

Die Zuförderer 31 sind als Schwerkraftförderer ausgebildet, bestehen nämlich aus geneigt verlaufenden, rohrförmigen Strängen, an denen die Transportbügel 20 mit den Bekleidungsstücken vom Vorförderer 29 zum Übergabeförderer 32 rutschen.

Der zweite Zuförderer 31 verfügt über einen vom ersten Zuförderer 30 abweichenden Verlauf, ist nämlich mit einer Wendeschleife 37 versehen. Im Ausführungsbeispiel der Fig. 1 setzt sich die Wendeschleife 37 aus zwei sich überlappenden und entgegengesetzt zueinander verlaufenden 90°-Bogenbereichen 38, 39 zusammen. Letztere sind in dem zweiten Zuförderer 31 integriert. Der erste zum Vorförderer 29 hinweisende Bogenbereich 38 des zweiten Zuförderers 31 ist kürzer als der zweite zum Übergabeförderer 32 weisende Bogenbereich 39. Demnach ragt der unter dem Bogenbereich 38 liegende (längere) Bogenbereich 39 mit einem kurzen Endabschnitt 40 über das Ende 41 des (kurzen) Bogenbereichs 38 hinaus, überlappt diesen also.

In der Fig. 2 ist eine alternative Wendeschleife 42 dargestellt. Diese geht von einer dem ersten Zuförderer 30 gegenüberliegenden Seite des Vorförderers 29 aus und ist in einem 180°-Bogen unter dem Vorförderer 29 hindurchgeführt auf die zum zweiten Zuförderer 31 weisende Seite des Vorförderers 29.

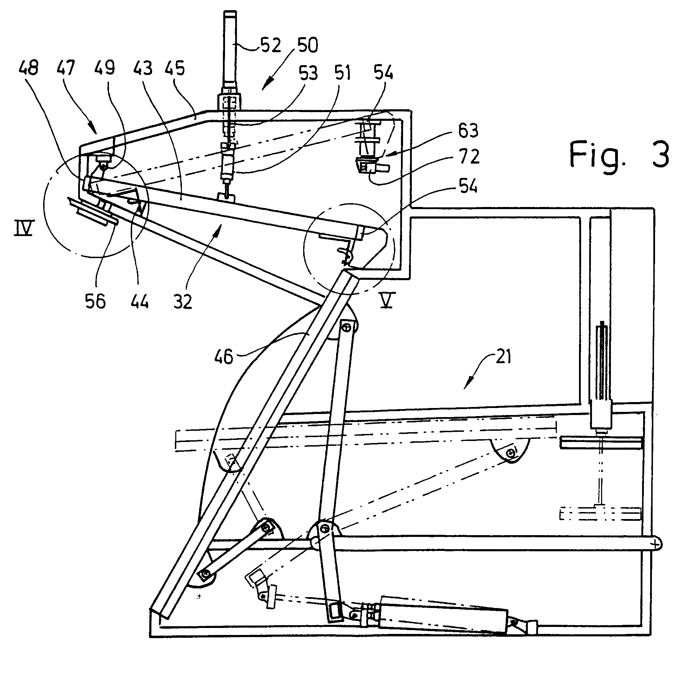

Der in der Fig. 3 vollständig dargestellte Übergabeförderer 32 ist als intermittierender (hin- und hergehender) Schleppförderer ausgebildet. Er besteht aus einem handelsüblichen kolbenstangenlosen Zylinder 43 (Shuttle-Zylinder) mit einem hin- und herbeweglich antreibbaren Förderhaken 44. Der kolbenstangenlose Zylinder 43 des Übergabeförderers 32 ist hängend unter einem im gezeigten Ausführungsbeispiel mit dem Faltautomaten 21 verbundenen Tragrahmen 45 angeordnet. Dieser Tragrahmen 45 steht gegenüber einem oberen Rand einer schwenkbaren Arbeitsplatte 46 des Faltautomaten 21 vor. An einem vorderen Ende 47 des Tragrahmens 45 ist ein von der Arbeitsplatte 46 weggerichtetes Ende 48 des kolbenstangenlosen Zylinders 43 schwenkbar durch ein Kipplager 49 angelenkt. Etwa mittig oberhalb des kolbenstangenlosen Zylinders 43 befindet sich ein Huborgan 50, mit dem der kolbenstangenlose Zylinder 43 um das Kipplager 49 verschwenkbar ist. Das Huborgan 50 setzt sich hier aus zwei hintereinanderliegend angeordnete Druckmittelzylinder 51 und 52 zusammen. Der (untere) Druckmittelzylinder 51 ist einerseits am kolbenstangenlosen Zylinder 43 und andererseits an einer Kolbenstange 53 des (oberen) Druckmittelzylinders 52 angelenkt. Das der Kolbenstange 53 gegenüberliegende Ende des (oberen) Druckmittelzylinders 52 ist mit dem Tragrahmen 45 verbunden.

Die Länge des Übergabeförderers 32 ist derart bemessen, daß der Förderhaken 44 so weit zum zur Arbeitsplatte 46 weisenden freien Ende 54 des kolbenstangenlosen Zylinders 43 verfahrbar ist, daß das auf dem Transportbügel 20 hängende Bekleidungsstück auf der Arbeitsplatte 46 anliegt.

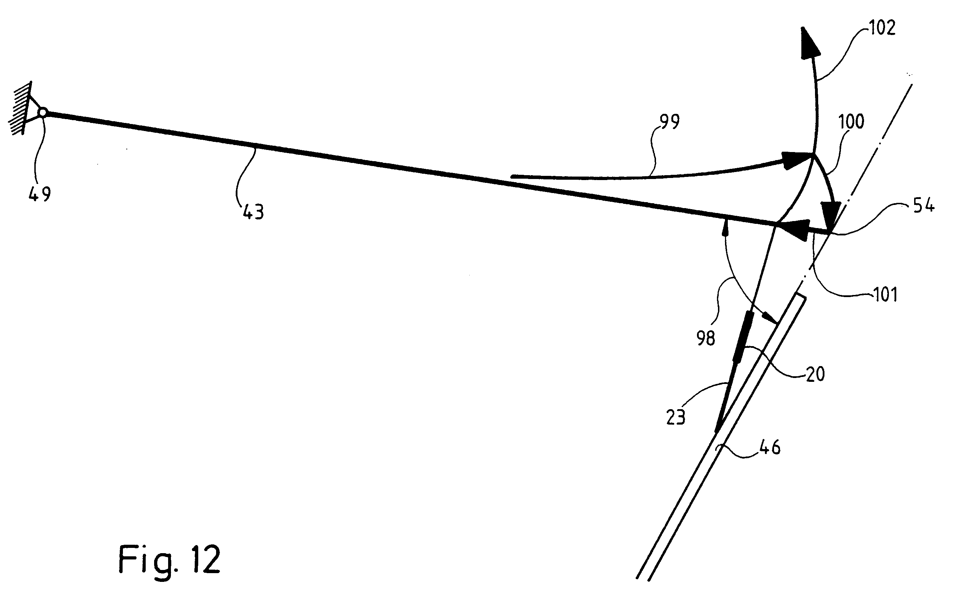

Der kolbenstangenlose Zylinder 43 ist dem Faltautomaten 21 derart zugeordnet, daß in der Übergabeposition seine Längsachse unter einem spitzen Winkel 98 zur Arbeitsplatte 46 des Faltautomaten 21 verläuft. Dieser spitze Winkel 98 beträgt im gezeigten Ausführungsbeispiel nach den Fig. 3 bzw. 12 etwa 70°.

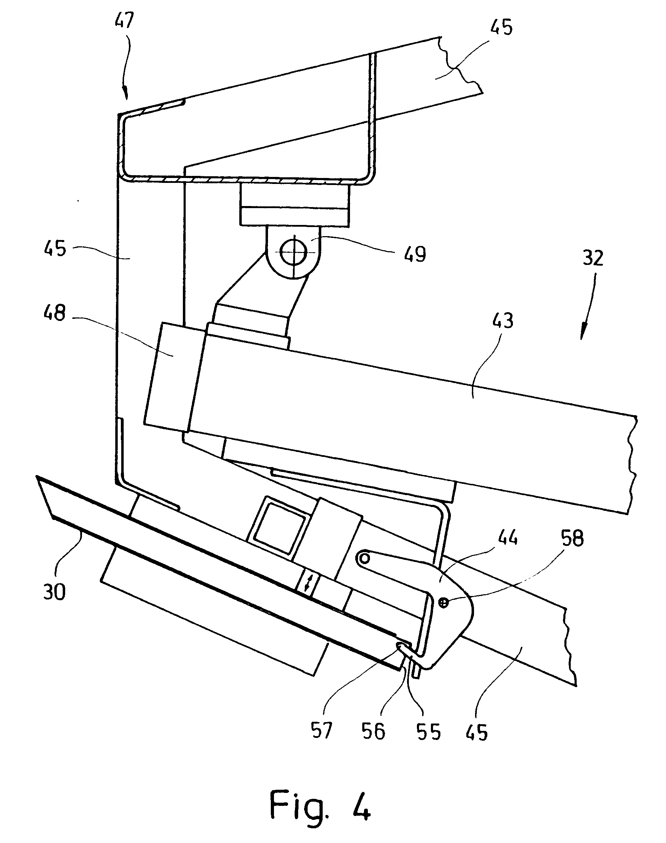

Der in der Fig. 4 dargestellte Förderhaken 44 des Übergabeförderers 32 ist so ausgebildet, daß dieser in einer zum Ende 48 des kolbenstangenlosen Zylinders 43 gefahrenen Stellung mit einer Auflagernase 55 sich vor dem Ende 56 des Zuförderers 30 befindet, und zwar gegenüber seiner Oberseite etwas tiefer versetzt. Es kann so jeweils ein Transportbügel 20 mit seinem Haken 26 auf die Auflagernase 55 des Förderhakens 44 rutschen. Dadurch, daß die Auflagernase 55 ausgehend von ihrer freien Spitze 57 schräg abwärts verläuft, wird der Haken 26 des Transportbügels 20 selbsttätig am Förderhaken 44 gehalten. Gegebenenfalls kann in dieser Position der Haken 26 durch eine in der Fig. 4 nicht dargestellte formschlüssige Sicherung gehalten werden.

Der Förderhaken 44 ist um eine etwa mittige Drehachse 58 am kolbenstangenlosen Zylinder 43 schwenkbar zum Ausklinken leerer, eingeklappter Transportbügel 20 nach dem Ablegen des zuvor darauf aufgehängten Bekleidungsstücks auf die Arbeitsplatte 46 des Faltautomaten 21.

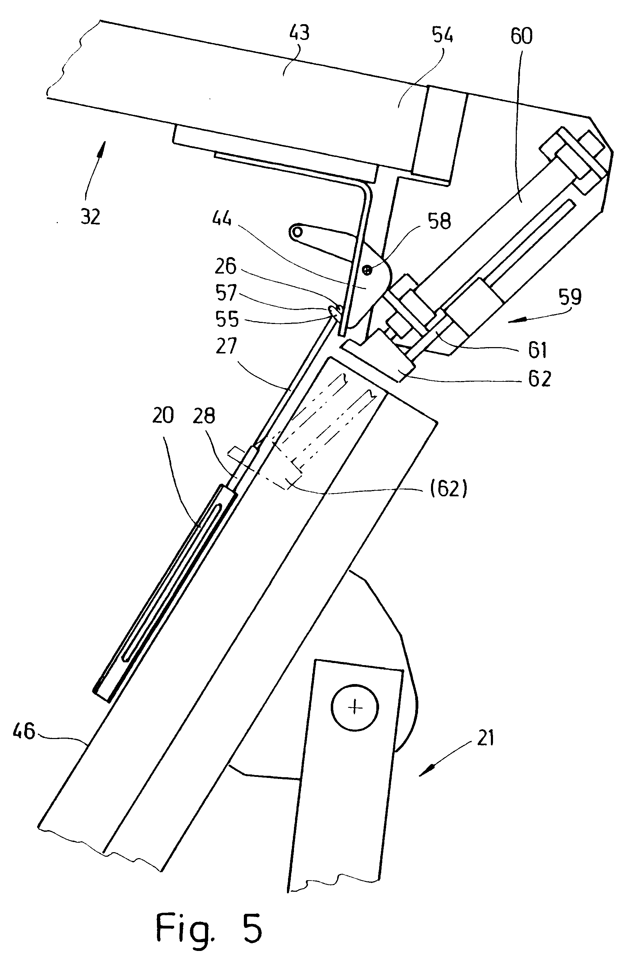

Die Fig. 5 zeigt den Übergabeförderer 32 in der Übergabeposition des Bekleidungsstücks an die Arbeitsplatte 46 des Faltautomaten 21. Dabei ist der Förderhaken 44 zum gegenüberliegenden freien Ende 54 des kolbenstangenlosen Zylinders 43 gefahren, so daß der jeweilige Transportbügel 20 vor der Arbeitsplatte 46 sich befindet, und zwar in einer etwa parallel zu dieser ausgerichteten Position. Dabei hängt der Transportbügel 20 immer noch mit seinem Haken 26 am Förderhaken 44. In dieser Position ist ein oberhalb der Arbeitsplatte 46 angeordnetes Auslöseorgan 59 mit dem Auslösestift 28 des Transportbügels 20 in Verbindung bringbar. Dazu besteht das Auslöseorgan 59 aus einem Druckmittelzylinder 60, der zur Ebene der Arbeitsplatte 46 etwas geneigt ist und damit auf der vom Transportbügel 20 weggerichteten Rückseite des Förderhakens 44 liegt. An einem freien Ende einer Kolbenstange 61 des Druckmittelzylinders 60 ist ein Anschlagpuffer 62 befestigt, der beim Ausfahren des Druckmittelzylinders 60 auf dem Auslösestift 28 des Transportbügels 20 zur Anlage kommt und diesen so weit in das gehäuseartige Hakenteil 22 des Transportbügels 20 hineindrückt, daß die die Bügelarme 23 in ihrer ausgeklappten Stellung haltende Arretierung aufgehoben wird und damit die Bügelarme 23 der Schwerkraft folgend selbsttätig einschwenken.

Zum Abfördern leerer Transportbügel 20 vom Faltautomaten 21 dient das in den Fig. 1 und 2 dargestellte - gleichermaßen ausgebildete - Abfördersystem. Dieses setzt sich - funktionell gesehen - aus vier Teilförderern, nämlich einem Abförderer 63, einem Verbindungsförderer 64, einem Wendeförderer 65 und einem Zwischenförderer 95, zusammen. Der Abförderer 63 schließt an den Übergabeförderer 32 im Bereich des Faltautomaten 21 an. Dem Endbereich des Abförderers 63 ist auf einer Seite der Zwischenförderer 95 und auf der anderen Seite der Wendeförderer 65 zugeordnet.

Der Wendeförderer 65 geht hinter einem Kreuzungspunkt 66 des Zwischenförderers 95 mit dem Abförderer 63 direkt (nahtlos) in den Verbindungsförderer 64 über. Danach folgt eine in die Förderstrecke des Verbindungsförderers 64 integrierte Bügelspreizeinrichtung 67, in der die eingeklappten Bügelarme 23 der leeren Transportbügel 20 ausklappbar sind, bevor die Transportbügel 20 im weiteren Verlauf des Verbindungsförderers 64 wieder zum Vorförderer 29 transportiert werden.

Der Abförderer 63 verfügt über einen etwa horizontal verlaufend ortsfest am Tragrahmen 45 befestigten kolbenstangenlosen Zylinder 68, der quergerichtet zum Übergabeförderer 32 verläuft. An einem Verfahrschlitten 69 des kolbenstangenlosen Zylinders 68 ist ein Druckmittelzylinder 70 befestigt. Dieser verfügt über eine zum Faltautomaten 21 hin ausfahrbare Kolbenstange 71, an der ein Greifkopf 72 zur Übernahme und zum Halten der Haken 26 leerer Transportbügel 20 befestigt ist. Bei in Richtung zum Faltautomaten 21 gefahrenen Verfahrschlitten 69 des kolbenstangenlosen Zylinders 68 und ausgefahrener Kolbenstange 71 des daran befestigten Druckmittelzylinders 70 befindet sich der Greifkopf 72 unterhalb des Förderhakens 44 des hochgeschwenkten kolbenstangenlosen Zylinders 43 am Übergabeförderer 32.

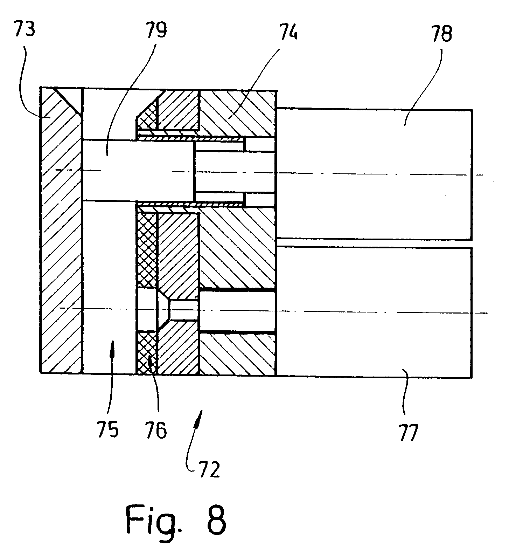

Der Greifkopf 72 ist zur Übernahme und Abgabe der Transportbügel 20 in besonderer Weise ausgebildet und in der Fig. 8 näher dargestellt. Demnach weist der in Draufsicht U-förmig ausgebildete Greifkopf 72 zwei parallele feste Platten 73 und 74 auf, zwischen denen ein zum Faltautomaten 21 offener Schlitz 75 gebildet ist. Im Inneren dieses Schlitzes 75 befindet sich eine vor der in der Fig. 8 rechten Platte 74 liegende Klemmplatte 76. Diese ist durch einen Druckmittelzylinder 77 in Richtung zur gegenüberliegenden Platte 73 so weit verfahrbar, daß zwischen der Klemmplatte 76 und der festen Platte 73 der Haken 26 des jeweils sich im Greifkopf 72 befindenden Transportbügels 20 festklemmbar ist. Des weiteren verfügt der Greifkopf 72 über einen quer zur Ebene der Platten 73, 74 durch einen weiteren Druckmittelzylinder 78 hin- und herbewegbaren Tragstift 79 für den Haken 26 des jeweiligen Transportbügels 20. Zum Übernehmen eines Transportbügels 20 vom Übergabeförderer 32 befindet sich der Tragstift 79 in der in der Fig. 8 dargestellten ausgefahrenen Position, in der er quer durch den Schlitz 75 verläuft und an der festen Platte 73 anliegt. Im eingefahrenen Zustand der Druckmittelzylinder 77 und 78 wird der Schlitz 75 durch die Klemmplatte 76 und den Tragstift 79 geöffnet zur Übergabe des jeweiligen Transportbügels 20 auf den Zwischenförderer 95 oder den Wendeförderer 65.

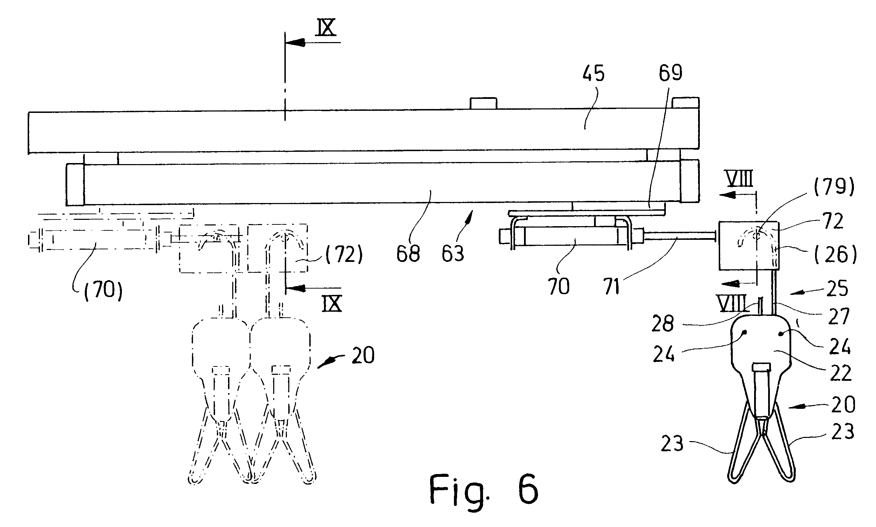

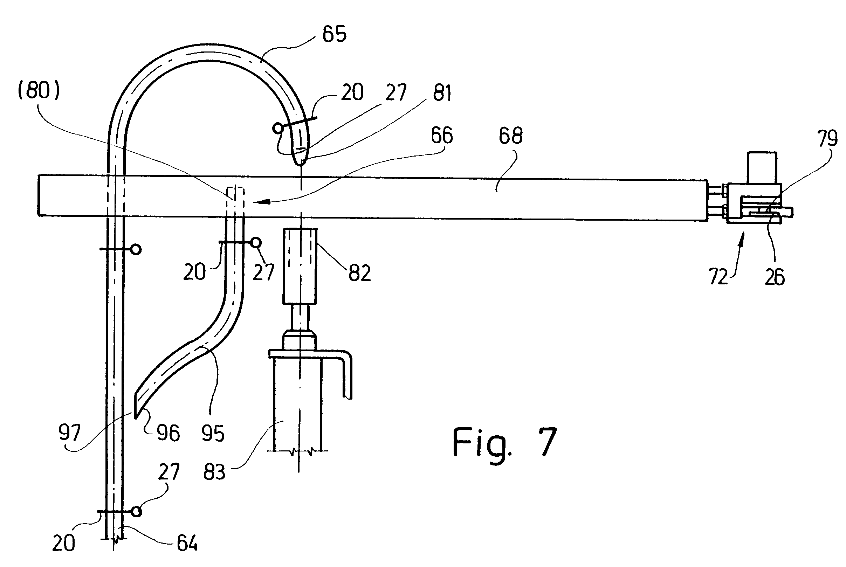

Die Fig. 6 zeigt die alternativen Relativstellungen, in denen die Transportbügel 20 am Greifkopf 72 des Abförderers 63 sich befinden können. Bei der in der Fig. 6 links dargestellten Relativanordnung sind die Transportbügel 20 unmittelbar vom Greifkopf 72 abwerfbar auf ein darunterliegendes Ende 80 des Zwischenförderers 95. Dazu ragt gemäß der Darstellung in der Fig. 7 das zum Abförderer 63 weisende Ende 80 des Zwischenförderers 95 zur Bildung des Kreuzungspunkts 66 in die Förderbahn des Abförderers 63 hinein.

In einer alternativen Relativanordnung der Transportbügel 20 erfolgt eine Übergabe derselben an den Wendeförderer 65. Ein zum Abförderer 63 weisendes Ende 81 desselben, das vom Faltautomaten 21 aus gesehen vor dem Ende 80 des Zwischenförderers 95 liegt, ragt nur so weit in die Bahn des Abförderers 63 hinein, daß der Greifkopf 72 mit einem daran hängenden (leeren) Transportbügel 20 zur direkten Übergabe desselben an den Zwischenförderer 95 ungehindert am Ende 81 vorbeibewegbar ist. Um gleichwohl einen Transportbügel 20 an den Wendeförderer 65 übergeben zu können, ist diesem eine Verlängerung zugeordnet. Diese Verlängerung ist hier als ein in Ruhestellung der dem Wendeförderer 65 gegenüberliegenden Seite des Abförderers 63 zugeordneter Rohrabschnitt 82 ausgebildet. In der Übergabeposition des Greifkopfs 72 vor dem Wendeförderer 65 ist durch einen Druckmittelzylinder 83 der Rohrabschnitt 82 so weit vorfahrbar, daß er die Förderbahn des Abförderers 63 kreuzt und bereichsweise das Ende 81 des Wendeförderers 65 umgibt. Es kann dann über den Rohrabschnitt 82 der Haken 26 des entsprechenden Transportbügels 20 auf den Wendeförderer 65 geführt werden.

Wie weiter die Fig. 7 zeigt, ist der Zwischenförderer 95 mit seinem vom Abförderer 63 weggerichteten freien Ende 96 seitlich an den Verbindungsförderer 64 bzw. das Ende des Wendeförderers 65 herangeführt, und zwar derart, daß das freie Ende 96 oberhalb des Verbindungsförderers 64 bzw. des Wendeförderers 65 endet. Auf diese Weise können die vom Abförderer 63 über den Zwischenförderer 95 unverdreht abgeförderten Transportbügel 20 auf den Verbindungsförderer 64 bzw. das Ende des Wendeförderers 65 rutschen. Des weiteren entsteht durch das höhere Heranführen des freien Endes 96 des Zwischenförderers 95 an den Verbindungsförderer 64 bzw. das Ende des Wendeförderers 65 ein in der Fig. 7 zu Verdeutlichungszwecken neben dem Verbindungsförderer 64 bzw. dem Wendeförderer 65 angedeuteter Spalt 97, der ein freies Entlanggleiten der Verbindungsabschnitte 27 der vom Wendeförderer 65 kommenden Transportbügel 20 am freien Ende 96 des Zwischenförderers 95 gewährleistet.

Sowohl der Verbindungsförderer 64 als auch der Wendeförderer 65 und der Zwischenförderer 95 sind als geneigte Schwerkraftförderer mit einer rohrförmig ausgebildeten Förderstrecke analog zum Zuförderer 30 bzw. 31 ausgebildet.

Die Fig. 10 und 11 zeigen die in die Förderbahn des Verbindungsförderers 64 integrierte Bügelspreizeinrichtung 67. Diese verfügt über ein Stopp- und Klemmorgan 85 zum Anhalten der Transportbügel 20 an den Haken 26 in der Bügelspreizeinrichtung 67 und zur Arretierung des Transportbügels 20 am Haken 26 zum Aufrichten der Bügelarme 23. Das Stopp- und Klemmorgan 85 weist zum einen eine durch einen Druckmittelzylinder 86 quer in die Bahn des Verbindungsförderers 64 hineinfahrbare Stoppplatte 87 und zum anderen eine durch einen weiteren Druckmittelzylinder 88 gegen die Stoppplatte 87 schwenkbare Klemmplatte 89 auf.

Unterhalb des jeweils zwischen der Stoppplatte 87 und der Klemmplatte 89 festgeklemmten Transportbügels 20 befinden sich zwei durch Schwenkzylinder 90 um ortsfeste Drehpunkte 91 gegensinnig verschwenkbare Ausklapparme 92. Beim Einlaufen des Transportbügels 20 in das Stopp- und Klemmorgan 85 gelangen in Transportrichtung des Verbindungsförderers 64 verlaufende Anschlagabschnitte 93 der Ausklapparme 92 zwischen die in der Fig. 10 strichpunktliniert dargestellten eingeklappten Bügelarme 23 zum Ausklappen derselben.

Die Übergabe der Transportbügel 20 vom Verbindungsförderer 64 auf den Vorförderer 29 kann durch an sich bekannte Übergabeorgane erfolgen, die hinsichtlich ihrer Bauart und Funktionsweise von der Ausgestaltung des Vorförderers 29 abhängen. Im einfachsten Falle kann am Ende des Verbindungsförderers 64 eine Klinke angeordnet sein, die immer dann geöffnet wird, wenn ein Tragorgan des Vorförderers 29 an dem vorzugsweise rohrförmig ausgebildeten Abwurfende 94 des Verbindungsförderers 64 sich vorbeibewegt, so daß der jeweilige Transportbügel 20 mit dem Haken 26 vom Abwurfende 94 des Verbindungsförderers 64 auf den Vorförderer 29 gelangt.

Die Übergabe von Transportbügeln 20 mit darauf hängenden Bekleidungsstücken vom Vorförderer 29 auf den entsprechenden Zuförderer 30 bzw. 31 erfolgt zweckmäßigerweise durch einen nicht dargestellten druckmittelbetätigten Stößel, der den jeweiligen Transportbügel 20 vorzugsweise am Haken 26 oder dessen Verbindungsabschnitt 27 vom Tragorgan des Vorförderers 29 auf den jeweiligen Zuförderer 30 bzw. 31 schiebt. Durch entsprechendes Ansteuern der Druckmittelzylinder wird ein zur Übergabe an den jeweiligen Zuförderer 30 bzw. 31 dienender Druckstempel so gesteuert, daß die an den ersten Zuförderer 30 zu übergebenden Transportbügel 20 mit darauf hängenden Bekleidungsstücken bereits am ersten Zuförderer 30 vom entsprechenden Tragorgan des Vorförderers 29 abgeschoben werden, während alle weiterlaufenden Transportbügel 20 mit darauf hängenden Bekleidungsstücken zwangsläufig auf den zweiten Zuförderer 31 geschoben werden. Die Steuerung insbesondere des dem ersten Zuförderer 30 zugeordneten Druckmittelzylinders erfolgt vorzugsweise in Abhängigkeit von einer Codierung an den Bekleidungsstücken oder den Transportbügeln 20.

Das erfindungsgemäße Verfahren wird unter Bezugnahme auf die vorstehend beschriebene Vorrichtung näher erläutert. Um dabei die Relativlage der Transportbügel 20 in den Fig. 1 und 2 übersichtlicher darzustellen, sind die Transportbügel 20 durch einen schwarzen Balken dargestellt, der an einem Ende einen Kreis aufweist. Dieser Kreis soll die Lage der außermittig am gehäuseartigen Hakenteil 22 der Transportbügel 20 angeordneten Verbindungsabschnitte 27 der Haken 26 symbolisieren, die je nach Orientierung der Transportbügel 20 auf der einen oder anderen Seite des Zu- oder Abfördersystems liegen. Des weiteren sind durch dickere Balken Transportbügel 20 mit darauf hängenden Bekleidungsstücken dargestellt. Demgegenüber symbolisieren dünnere Balken leere Transportbügel 20, und zwar sowohl im eingeklappten als auch ausgeklappten Zustand.

Sämtliche Bekleidungsstücke werden von einer Bedienungsperson auf gleichermaßen ausgerichtete Transportbügel 20 mit nach vorn weisender Vorderseite aufgehängt - und sofern notwendig - zugeknöpft. Danach werden die Transportbügel 20 mit darauf hängenden Bekleidungsstücken vom Vorförderer 29 in Richtung zum ersten Zuförderer 30 transportiert. In Abhängigkeit von geeigneten Signalen, beispielsweise einer Codierung im oder am Bekleidungsstück oder am Transportbügel 20, wird nun ein sich jeweils vor dem ersten Zuförderer 30 befindender Transportbügel 20 mit darauf hängendem Bekleidungsstück auf den ersten Zuförderer 30 geschoben oder in Förderrichtung 33 auf dem Vorförderer 29 weiterbewegt zum zweiten Zuförderer 31. Hier werden die restlichen Transportbügel 20 mit darauf hängenden Bekleidungsstücken an den zweiten Zuförderer 31 übergeben. Gegebenenfalls kann auch an dieser Stelle eine Überprüfung stattfinden, ob der jeweilige Transportbügel 20 mit dem Bekleidungsstück an den zweiten Zuförderer 31 übergeben werden soll, um zu vermeiden, daß nicht solche Transportbügel 20 mit Bekleidungsstücken an den zweiten Zuförderer 31 übergeben werden, die an den ersten Zuförderer 30 hätten übergeben werden sollen.

Die an den ersten Zuförderer 30 übergebenen Transportbügel 20 mit daran hängenden Bekleidungsstücken werden stets mit in der Fig. 1 links vom ersten Zuförderer 30 liegenden Verbindungsabschnitten 27 (also ohne um 180° verdreht zu werden) zum Übergabeförderer 32 transportiert. Demgegenüber werden die an den zweiten Zuförderer 31 übergebenen Transportbügel 20 mit darauf hängenden Bekleidungsstücken entweder gemäß der Fig. 2 am Beginn des zweiten Zuförderers 31 auf der Wendeschleife 42 um 180° gedreht, daß die Verbindungsabschnitte 27 rechts vom zweiten Zuförderer 31 (bezogen auf die Fig. 2) liegen, also eine um 180° abweichende Relativposition zu den Transportbügeln 20 auf dem ersten Zuförderer 30 aufweisen. In dieser gedrehten Position werden die Transportbügel 20 mit darauf hängenden Bekleidungsstücken am Ende des zweiten Zuförderers 31 auf den ersten Zuförderer 30 durch Hinübergleiten übergeben und vom ersten Zuförderer 30 weitergefördert an den Übergabeförderer 32. Bei der alternativen Ausführungsform des zweiten Zuförderers 31 nach der Fig. 1 erfolgt ein Wenden in zwei aufeinanderfolgenden 90°-Bogenbereichen 38, 39, die in die Förderstrecke des zweiten Zuförderers 31 integriert sind.

Sämtliche Transportbügel 20 mit darauf hängenden Bekleidungsstücken, und zwar in gezielt unterschiedlicher (um 180° zueinander versetzter) Orientierung, werden über das Ende 56 des ersten Zuförderers 30 an den Übergabeförderer 32 übergeben. Diese Übergabe geschieht bei vollständig in Richtung zum Ende 56 gefahrenen Förderhaken 44 des Übergabeförderers 32, bei dem gemäß der Darstellung in der Fig. 4 die Haken 26 sämtlicher Transportbügel 20 auf den Förderhaken 44 aufgleiten und durch seine schräg verlaufende Auflagernase 55 (bzw. eine eventuelle zusätzliche Sicherungsklinke) formschlüssig gehalten werden.

Durch Verfahren des Förderhakens 44 auf dem intermittierenden Übergabeförderer 32, nämlich den kolbenstangenlosen Zylinder 43, in Richtung zum Faltautomaten 21 gelangen die Bekleidungsstücke mit den Transportbügeln 20 auf die im gezeigten Ausführungsbeispiel geneigte Arbeitsplatte 46 des Faltautomaten 21. Hierbei wird der kolbenstangenlose Zylinder 43 durch geringfügiges Einfahren des Druckmittelzylinders 52 leicht hochgeschwenkt. Der Förderhaken 44 mit dem Transportbügel 20 und dem darauf hängenden Bekleidungsstück wird dadurch auf einer bogenförmig ansteigenden Anförderbahn 99 gemäß der Fig. 12 bewegt. Am Ende der Anförderbahn 99 befindet sich der Förderhaken 44 in einer zur Übernahmeposition des Transportbügels 20 gegenüberliegenden Endposition gemäß der Fig. 5 am Übergabeförderer 32. So werden je nach Orientierung der Transportbügel 20 die Bekleidungsstücke entweder mit der Vorderseite oder der Rückseite voran auf die Arbeitsplatte 46 des Faltautomaten 21 aufgelegt.

Nach dem Auflegen des Bekleidungsstücks auf die Arbeitsplatte 46 wird das Bekleidungsstück hierauf vorzugsweise durch Saugluft derart fixiert, daß der Transportbügel 20 aus der Halsöffnung des Bekleidungsstücks herausgezogen werden kann.

Im Anschluß an die Fixierung des Bekleidungsstücks auf der Arbeitsplatte 46 wird der Druckmittelzylinder 52 wieder um etwa den Weg abgesenkt, um den er beim Zuführen des Bekleidungsstücks zur Arbeitsplatte 46 zur Erzielung der Anförderbahn 99 angehoben worden ist. Das zur Arbeitsplatte 46 hinweisende freie Ende des kolbenstangenlosen Zylinders 43 wird mit dem Förderhaken 44 und dem Transportbügel 20 dabei auf der in der Fig. 12 gezeigten Absenkbahn 100 abwärtsbewegt. Auf diese Weise wird die von dem Bekleidungsstück auf die Bügelarme 23 des Transportbügels 20 ausgeübte Belastung aufgehoben zum leichteren Herausziehen des Transportbügels 20 aus dem Bekleidungsstück nach dem Einklappen der Bügelarme 23. Dazu wird der Druckmittelzylinder 60 des Auslöseorgans 59 ausgefahren, so daß der Anschlagpuffer 62 an der Kolbenstange 61 des Druckmittelzylinders 60 den Auslösestift 28 des Transportbügels 20 herunterdrücken und dadurch die Bügelarme 23 entriegeln kann. Danach klappen die Bügelarme 23 selbsttätig zusammen.

Vor dem Herausziehen des Transportbügels 20 mit den eingeklappten Bügelarmen aus dem Bekleidungsstück wird der Förderhaken 44 vom kolbenstangenlosen Zylinder 43 geringfügig aus seiner zur Arbeitsplatte 46 weisenden Endposition herausgefahren, nämlich auf der in der Fig. 12 dargestellten Abrückbahn 101 von der Arbeitsplatte 46 wegbewegt. Hierdurch kommt der Transportbügel 20 mit den eingeklappten Bügelarmen 23 in die ebenfalls in der Fig. 12 dargestellte, leicht zur Ebene der Arbeitsplatte 46 geneigte Position. In dieser stützen sich die freien Enden der eingeklappten Bügelarme 23 des Transportbügels 20 auf der auf der Arbeitsplatte 46 anliegenden und hier fixierten Seite des Bekleidungsstücks ab. Die gegenüberliegende, von der Arbeitsplatte 46 weggerichtete Seite des Bekleidungsstücks wird im Halsbereich derselben durch die Schrägstellung des Transportbügels 20 gegenüber der Arbeitsplatte 46 von der auf dieser aufliegenden Seite des Bekleidungsstücks abgehoben, wodurch diese Seite des Bekleidungsstücks nicht auf der Arbeitsplatte 46 fixiert wird. Es läßt sich so der eingeklappte Transportbügel 20 leicht aus dem Bekleidungsstück herausziehen, und zwar ohne daß dieses hierbei einen Faltenwurf erhält.

Die eingeklappten Transportbügel 20 werden aus dem Bekleidungsstück herausgezogen, indem der kolbenstangenlose Zylinder 43 des Übergabeförderers 32 um das Kipplager 49 an seinem dem Faltautomaten 21 gegenüberliegenden Ende 48 durch den Druckmittelzylinder 52 verschwenkt wird. Dabei wird der eingeklappte Transportbügel 20 auf der wiederum in der Fig. 12 dargestellten kreisbogenförmigen Ausziehbahn 102 hochbewegt.

Der weitere Druckmittelzylinder 51 am Übergabeförderer 32 dient dazu, die Neigung des kolbenstangenlosen Zylinders 43 bei der Zuführung der Bekleidungsstücke zum Faltautomaten 21 in Abhängigkeit von der Länge der Bekleidungsstücke zu verändern. Dieses ist nötig, weil beispielsweise Patientenhemden keinen Kragen haben und deshalb tiefer auf den Transportbügel 20 hängen als mit Kragen versehene Bekleidungsstücke, beispielsweise Kittel. Durch entsprechendes Einfahren des Druckmittelzylinders 51 wird der kolbenstangenlose Zylinder 43 des Übergabeförderers 32 mit seinem zum Faltautomaten 21 weisenden Ende gegenüber der Arbeitsplatte 46 hochgehoben, wodurch die tiefer auf dem Transportbügel 20 hängenden Patientenhemden entsprechend höher auf der Arbeitsplatte 46 abgelegt werden. Dadurch ist es möglich, sämtliche Bekleidungsstücke unabhängig von ihrer Art und Länge, also sowohl Patientenhemden als auch Kittel, mit gleich hoher Unterkante dem Faltautomaten 21 zuzuführen. Dadurch lassen sich beliebige Bekleidungsstücke auf dem Faltautomaten 21 mit bündig abschließenden (Quer-)Kanten falten. Insbesondere wird bei Patientenhemden erreicht, daß nach der letzten Kreuzfaltung die Oberkante desselben mit der durch die erste Kreuzfaltung entstandenen Faltkante abschließt und nicht zurücksteht.

Zur Übergabe der leeren eingeklappten Transportbügel 20 auf den Abförderer 63 wird dessen Greifkopf 72 mit dem Verfahrschlitten 69 des kolbenstangenlosen Zylinders 68 und dem Druckmittelzylinder 70 in eine zum Faltautomaten 21 weisende Endstellung unter den Förderhaken 44 am Übergabeförderer 32 gefahren. Dabei wird der Tragstift 79 durch den Druckmittelzylinder 78 gegen die außenliegende feste Platte 73 gefahren, so daß der Tragstift 79 quer durch den Schlitz 75 des Greifkopfs 72 verläuft, also die in der Fig. 8 dargestellte Stellung aufweist. Nach einem Verschwenken des Förderhakens 44 um die Drehachse 58 wird der Haken 26 des Transportbügels 20 aus dem Förderhaken 44 des Übergabeförderers 32 ausgeklinkt und fällt auf den Tragstift 19 des Greifkopfs 72. Danach wird die Klemmplatte 76 des Greifkopfs 72 durch den Druckmittelzylinder 77 ausgefahren zum Festklemmen des Hakens 26 zwischen der Klemmplatte 76 und der außenliegenden festen Platte 73 des Greifkopfs 72. Anschließend wird der Verfahrschlitten 69 mit dem Greifkopf 72 in die vom Faltautomaten 21 weggerichtete Endposition des kolbenstangenlosen Zylinders 68 gefahren.

Je nach der Relativstellung des Transportbügels 20 am Greifkopf 72 bleibt in der vorstehend geschilderten Endstellung des Abförderers 63 die Kolbenstange 71 des Druckmittelzylinders 70 unter dem Verfahrschlitten 69 ausgefahren oder eingefahren. Befindet sich der Verbindungsabschnitt 27 des Aufhängehakens 25 des Transportbügels 20 gemäß der mittleren Darstellung (mit unterbrochenen Linien) der Fig. 6 auf der linken Seite des Tragstifts 79, erfolgt eine Übergabe des Transportbügels 20 bei ausgefahrener Kolbenstange 71 des Druckmittelzylinders 70 an den Wendeförderer 65. Bevor diese Übergabe erfolgt, wird durch den Druckmittelzylinder 83 der Rohrabschnitt 82 auf das Ende 81 des Wendeförderers 65 geschoben, so daß unter dem Greifkopf 72 eine geschlossene Bahnkreuzung entsteht. Hiernach wird durch Einfahren beider Druckmittelzylinder 77 und 78 die Klemmplatte 76 gegen die feste Platte 74 gefahren und der Tragstift 79 zurückbewegt zum Öffnen des Schlitzes 75. Es kann dann der Transportbügel 20 im freien Fall so weit herunterfallen, daß dessen Haken 26 auf dem Rohrabschnitt 82 zur Ablage kommt, wonach der Transportbügel 20 auf dem geneigt verlaufenden Wendeförderer 65 unter einer Drehung von 180° entlanggleitet und von diesem auf den sich an den Wendeförderer 65 anschließenden Verbindungsförderer 64 rutscht.

Beim gemäß der linken und rechten (äußeren) Darstellung der Transportbügel 20 in der Fig. 6 rechts vom Tragstift 79 liegenden Verbindungsabschnitt 27 erfolgt eine direkte Übergabe des Transportbügels 20 auf den Zwischenförderer 95, indem bei eingefahrener Kolbenstange 71 des Druckmittelzylinders 70 die Klemmplatte 76 und der Tragstift 79 eingefahren werden zum Öffnen des Schlitzes 75, wonach der Haken 26 auf den Zwischenförderer 95 gelangt. Vom Zwischenförderer 95 rutscht anschließend der Transportbügel 20 ohne eine Drehung desselben selbsttätig über den Spalt 97 hinweg auf den Verbindungsförderer 64.

Durch die vorstehend beschriebene Übergabe der leeren eingeklappten Transportbügel 20 vom Abförderer 63 auf den Verbindungsförderer 64 liegen hinter dem Wendeförderer 65 und dem Zwischenförderer 95 alle Transportbügel 20 mit gleicher Relativanordnung, nämlich in den Fig. 1 und 2 links neben dem Verbindungsförderer 64 liegenden Verbindungsabschnitten 27 der Aufhängehaken 25, auf dem Verbindungsförderer 64.

Bevor die gleichermaßen ausgerichteten Transportbügel 20 vom Verbindungsförderer 64 wieder auf den Vorförderer 29 übergeben werden, durchlaufen alle Transportbügel 20 die Bügelspreizeinrichtung 67. In dieser werden die Transportbügel 20 an den Haken 26 durch das Stopp- und Klemmorgan 86 abgestoppt und gegen Hochdrücken festgeklemmt. Danach werden durch gleichzeitiges Betätigen beider Schwenkzylinder 90 an der Bügelspreizeinrichtung 67 die Ausklapparme 92 derselben gegensinnig verschwenkt zum Ausklappen der Bügelarme 23. Diese rasten dabei an der Arretierungsvorrichtung in den Transportbügeln 20 ein und werden so in der ausgeklappten Stellung gehalten. Dadurch sind die Transportbügel 20 vorbereitet zur Aufnahme eines nächsten Bekleidungsstücks.

Die leeren Transportbügel 20 mit ausgeklappten Bügelarmen 23 werden nach dem Passieren der Bügelspreizeinrichtung 67, nämlich nach einem Lösen des Stopp- und Klemmorgans 85, auf dem Verbindungsförderer 64 weitergeleitet zum Vorförderer 29. Die Übergabe der Transportbügel 20 auf den Vorförderer 29 kann durch an sich bekannte Organe erfolgen, wobei vorzugsweise die Transportbügel 20 mit ihren Haken 26 auf am Verbindungsförderer 64 vorbeibewegte Tragorgane geschoben und danach vom Vorförderer 29 weitertransportiert werden zu einer Beschickungsstation oder dergleichen zum erneuten Aufhängen von Bekleidungsstücken auf die Transportbügel 20.

## Patentansprüche

1. Verfahren zum Zuführen von auf Transportbügeln (20) hängenden Bekleidungsstücken zu einer Behandlungseinrichtung, insbesondere einem Faltautomaten (21), wobei die Bekleidungsstücke auf den Transportbügeln (20) hängend der Behandlungseinrichtung zugeführt und nach der Übergabe an die Behandlungseinrichtung die leeren Transportbügel (20) abgeführt werden, **dadurch gekennzeichnet**, daß bestimmte Bekleidungsstücke durch Drehen der Transportbügel (20) in alternativen Relativpositionen der Behandlungseinrichtung zugeführt werden und nach der Übergabe der Bekleidungsstücke an die Behandlungseinrichtung die leeren Transportbügel (20) wieder in eine gleiche Relativposition zueinander gebracht werden, indem die vor der Übergabe verdrehten Transportbügel (20) in eine zu den übrigen Transportbügeln (20) gleiche Position gebracht werden.

2. Verfahren nach Anspruch 1, dadurch gekennzeichnet, daß die auf einem Vorförderer (29) mit gleicher Orientierung angeförderten Transportbügel (20) mit darauf hängenden Bekleidungsstücken über verschiedene Zuförderer (30, 31) geleitet werden, wobei auf einem Zuförderer (31) alle Transportbügel (20) mit den Bekleidungsstücken um vorzugsweise 180° verdreht werden, bevor sie zur Behandlungseinrichtung weitertransportiert werden.

3. Verfahren nach Anspruch 1 oder 2, dadurch gekennzeichnet, daß die Transportbügel (20) oder die darauf hängenden Bekleidungsstücke codiert werden und in Abhängigkeit von dieser Codierung vom Vorförderer (29) auf den einen oder anderen Zuförderer (30 bzw. 31) geleitet werden.

4. Verfahren nach Anspruch 1 sowie einem oder mehreren der weiteren Ansprüche, dadurch gekennzeichnet, daß hinter der Behandlungseinrichtung die zuvor gedrehten und nunmehr leeren Transportbügel (20) im Bereich der Übergabe von einem Förderer (63) auf den anderen Förderer zurückgedreht werden.

5. Verfahren nach einem oder mehreren der Ansprüche 1 bis 4, dadurch gekennzeichnet, daß nach dem Auflegen und mindestens teilweisen Halten eines jeweiligen Bekleidungsstücks auf der Behandlungseinrichtung der entsprechende Transportbügel (20) etwas abgesenkt wird und danach die Bügelarme (23) des Transportbügels (20) zum Herausziehen aus dem Bekleidungsstück eingeklappt werden.

6. Verfahren nach Anspruch 5, dadurch gekennzeichnet, daß nach dem Absenken des Transportbügels (20) ein den Bügelarmen (23) zugeordnetes Arretierungsorgan (28) betätigt wird zum selbsttätigen Einklappen der Bügelarme (23) und danach der jeweilige Transportbügel (20) aus dem Bekleidungsstück herausgezogen wird.

7. Verfahren nach Anspruch 5 oder 6, dadurch gekennzeichnet, daß die Transportbügel (20) vor dem Herausziehen aus dem Bekleidungsstück, vorzugsweise nach dem Einklappen der Bügelarme (23), in eine Position gebracht werden, in der die Längsmittelachsen der Transportbügel (20) leicht schräg zur Arbeitsebene (46) der Behandlungseinrichtung verlaufen.

8. Verfahren nach Anspruch 7, dadurch gekennzeichnet, daß die Transportbügel (20) in eine solche Position zur Arbeitsebene (46) gebracht werden, in der freie Enden der eingeklappten Bügelarme (23) sich auf der auf der Arbeitsebene (46) der Behandlungseinrichtung anliegenden Lage des Bekleidungsstücks abstützen und die von der Arbeitsebene (46) wegweisende Lage desselben vom Transportbügel (20) so weit von der Arbeitsebene (46) weggehalten wird, daß nur die zur Arbeitsebene (46) weisende Lage des Bekleidungsstücks auf der Arbeitsebene (46) fixiert wird.

9. Verfahren nach Anspruch 5 sowie einem oder mehreren der weiteren Ansprüche, dadurch gekennzeichnet, daß die leeren Transportbügel (20) mit eingeklappten Bügelarmen (23) zum Herausziehen aus den Bekleidungsstücken entlang einer kreisbogenförmigen Bahn bewegt werden, vorzugsweise durch ein Verschwenken des die Bekleidungsstücke zur Behandlungseinrichtung führenden Förderers (32).

10. Vorrichtung zum Zuführen von auf Transportbügeln (20) hängenden Bekleidungsstücken zu einer Behandlungseinrichtung, insbesondere einem Faltautomaten (21), mit mindestens einem zur Behandlungseinrichtung führenden Zufördersystem, dadurch gekennzeichnet, daß das Zufördersystem mindestens einen Vorförderer (29) und mehrere zu einem gemeinsamen Übergabeförderer (32) geführte Zuförderer (30, 31) aufweist, wobei wenigstens einem Zuförderer (31) ein Wendeorgan (37,42) zum zwangsweisen Wenden der diesen Zuförderer (31) durchlaufenden Transportbügel (20) mit daran hängenden Bekleidungsstücken zugeordnet ist.

11. Vorrichtung nach Anspruch 10, dadurch gekennzeichnet, daß das Wendeorgan als eine Wendeschleife (42) ausgebildet ist, die vorzugsweise im Bereich der Übergabe der Transportbügel (20) vom Vorförderer (29) auf den Zuförderer (31) angeordnet ist.

12. Vorrichtung nach Anspruch 10, dadurch gekennzeichnet, daß das Wendeorgan als eine Wendeschleife (37), die in die Strecke des entsprechenden Zuförderers (31) integriert und insbesondere aus zwei übereinanderliegenden, teilweise überlappenden Bogenbereichen (38, 39) gebildet ist, die insgesamt vorzugsweise einen 180°-Verlauf aufweisen.

13. Vorrichtung nach Anspruch 10 sowie einem oder mehreren der weiteren Ansprüche, dadurch gekennzeichnet, daß der Übergabeförderer (32) als hin- und hergehender Förderer, insbesondere als kolbenstangenloser Zylinder (43) mit mindestens einem Förderhaken (44) für den jeweiligen Transportbügel (20), ausgebildet ist.

14. Vorrichtung nach Anspruch 13, dadurch gekennzeichnet, daß der Übergabeförderer (32) bzw. kolbenstangenlose Zylinder (43) bezogen auf seine Längsachse unter einem spitzen Winkel von vorzugsweise 70 bis 80° zu einer Arbeitsplatte (46) der Behandlungseinrichtung verläuft.

15. Vorrichtung nach Anspruch 13 oder 14, dadurch gekennzeichnet, daß der Übergabeförderer (32) derart verstellbar ist, daß zumindest sein zur Behandlungseinrichtung weisendes freies Ende (54) in unterschiedlichen Höhen vor der Behandlungseinrichtung mündet.

16. Vorrichtung nach Anspruch 13 sowie einem oder mehreren der weiteren Ansprüche, dadurch gekennzeichnet, daß der Übergabeförderer (32) bzw. kolbenstangenlose Zylinder (43) um ein von der Behandlungseinrichtung weggerichtetes Ende (48) verschwenkbar ist.

17. Vorrichtung nach Anspruch 13 sowie einem oder mehreren der weiteren Ansprüche, dadurch gekennzeichnet, daß einem der Behandlungseinrichtung zugeordneten freien Ende (54) des Übergabeförderers (32) ein Auslöseorgan (59) zum Entriegeln der Bügelarme (23) der Transportbügel (20) zugeordnet ist.

18. Vorrichtung insbesondere nach Anspruch 10 sowie einem oder mehreren der weiteren Ansprüche, gekennzeichnet durch ein Abfördersystem für leere Transportbügel (20) von der Behandlungseinrichtung zum Vorförderer (29), das vorzugsweise mindestens einen Abförderer (63), einen Verbindungsförderer (64) und ein vorzugsweise als Wendeförderer (65) ausgebildetes Wendeorgan aufweist.

19. Vorrichtung nach Anspruch 18, dadurch gekennzeichnet, daß der Wendeförderer (65) in einer mindestens 180°-Schleife vom Abförderer (63) zum Verbindungsförderer (64) geführt ist, vorzugsweise nahtlos zum unmittelbar dahinterliegenden Verbindungsförderer (64) übergeht.

20. Vorrichtung nach Anspruch 19, dadurch gekennzeichnet, daß der Abförderer (63) einen Greifkopf (72) mit mindestens einem beweglichen Tragstift (79) zur Aufnahme eines Hakens (26) oder dergleichen des jeweiligen Transportbügels (20) aufweist.

21. Vorrichtung nach einem oder mehreren der Ansprüche 18 bis 20, dadurch gekennzeichnet, daß dem Wendeförderer (65) eine hin- und herbewegbare Verlängerung (82) zugeordnet ist, die den Wendeförderer (65) zur Übergabe eines Transportbügels (20) vom Abförderer (63) verlängert.

22. Vorrichtung nach Anspruch 18 sowie einem oder mehreren der weiteren Ansprüche, gekennzeichnet durch einen Zwischenförderer (95), der einen Endbereich des Abförderers (63) permanent kreuzt und vorzugsweise an den Verbindungsförderer (64) herangeführt ist.

23. Vorrichtung nach Anspruch 10 sowie einem oder mehreren der weiteren Ansprüche, dadurch gekennzeichnet, daß wenigstens die Zuförderer (30, 31), der Verbindungsförderer (64), der Wendeförderer (65), der Zwischenförderer (95) und die Wendeschleifen (37, 42) als insbesondere eine rohrförmige Förderbahn aufweisende Schwerkraftförderer mit geneigtem Verlauf ausgebildet sind.

## Claims

1. Process for feeding items of clothing, hanging on transporting hangers (20), to a handling device, in particular an automatic folding machine (21), the items of clothing being fed to the handling device in a state in which they are hanging on the transporting hangers (20) and, after transfer to the handling device, the empty transporting hangers (20) being guided away, characterized in that specific items of clothing are fed to the handling device in alternative relative positions, by virtue of the transporting hangers (20) being rotated, and, after transfer of the items of clothing to the handling device, the empty transporting hangers (20) are moved back into an identical relative position with respect to one another in that the transporting hangers (20) which have been rotated before transfer are moved into a position identical with the rest of the transporting hangers (20).

2. Process according to Claim 1, characterized in that the transporting hangers (20), conveyed up with the same orientation on a preliminary conveyor (29), with items of clothing hanging on them are directed via different feed conveyors (30, 31), all the transporting hangers (20) with the items of clothing being rotated through preferably 180° on one feed conveyor (31) before they are transported further to the handling device.

3. Process according to Claim 1 or 2, characterized in that the transporting hangers (20) or the items of clothing hanging thereon are coded and, in dependence on this coding, are directed from the preliminary conveyor (29) onto one or other of the feed conveyors (30 and 31).

4. Process according to Claim 1 and one or more of the further claims, characterized in that, downstream of the handling device, the previously rotated and now empty transporting hangers (20) are rotated back in the region of transfer from one conveyor (63) onto the other conveyor.

5. Process according to one or more of Claims 1 to 4, characterized in that, after a respective item of clothing has been positioned, and at least partially retained, on the handling device, the corresponding transporting hanger (20) is lowered somewhat and, thereafter, the hanger arms (23) of the transporting hanger (20) are swung in in order to be drawn out of the item of clothing.

6. Process according to Claim 5, characterized in that, after the lowering of the transporting hanger (20), an arresting member (28), which is assigned to the hanger arms (23), is actuated for the automatic swinging-in of the hanger arms (23), and the respective transporting hanger (20) is then drawn out of the item of clothing.

7. Process according to Claim 5 or 6, characterized in that, before being drawn out of the item of clothing, preferably after the hanger arms (23) have been swung in, the transporting hangers (20) are moved into a position in which the longitudinal centre axes of the transporting hangers (20) run slightly obliquely with respect to the operating plane (46) of the handling device.

8. Process according to Claim 7, characterized in that the transporting hangers (20) are moved into a position with respect to the operating plane (46), in which free ends of the swung-in hanger arms (23) are supported on that layer of the item of clothing which rests on the operating plane (46) of the handling device, and that layer of the item of clothing which is oriented away from the operating plane (46) is kept at such a distance away from the operating plane (46) by the transporting hanger (20) that it is only that layer of the item of clothing which is oriented towards the operating plane (46) which is fixed on the operating plane (46).

9. Process according to Claim 5 and one or more of the further claims, characterized in that, in order to be drawn out of the items of clothing, the empty transporting hangers (20) with swung-in hanger arms (23) are moved along a path in the form of an arc of a circle, preferably by a pivoting movement of the conveyor (32) guiding the items of clothing to the handling device.

10. Apparatus for feeding items of clothing, hanging on transporting hangers (20), to a handling device, in particular an automatic folding machine (21), having at least one feed-conveyor system leading to the handling device, characterized in that the feed-conveyor system exhibits at least one preliminary conveyor (29) and a plurality of feed conveyors (30, 31) leading to a common transfer conveyor (32), at least one feed conveyor (31) being assigned a turning member (37, 42) for forcibly turning the transporting hangers (20), running through said feed conveyor (31), with items of clothing hanging thereon.

11. Apparatus according to Claim 10, characterized in that the turning member is designed as a turning loop (42) which is arranged preferably in the region of transfer of the transporting hangers (20) from the preliminary conveyor (29) onto the feed conveyor (31).

12. Apparatus according to Claim 10, characterized in that the turning member is designed as a turning loop (37) which is integrated into the section of the corresponding feed conveyor (31) and is formed, in particular, from two partially overlapping arc regions (38, 39) which are located one above the other and, altogether, preferably run over 180°.

13. Apparatus according to Claim 10 and one or more of the further claims, characterized in that the transfer conveyor (32) is designed as a reciprocating conveyor, in particular as a piston-rod-free cylinder (43) with at least one conveying hook (44) for the respective transporting hanger (20).

14. Apparatus according to Claim 13, characterized in that the transfer conveyor (32) or piston-rod-free cylinder (43) runs, with respect to its longitudinal axis, at an acute angle of preferably 70 to 80° in relation to a working plate (46) of the handling device.

15. Apparatus according to Claim 13 or 14, characterized in that the transfer conveyor (32) can be adjusted such that at least its free end (54) oriented towards the handling device starts at different levels in front of the handling device.

16. Apparatus according to Claim 13 and one or more of the further claims, characterized in that the transfer conveyor (32) or piston-rod-free cylinder (43) can be pivoted about an end (48) directed away from the handling device.

17. Apparatus according to Claim 13 and one or more of the further claims, characterized in that a free end (54), assigned to the handling device, of the transfer conveyor (32) is assigned a triggering member (59) for unlocking the hanger arms (23) of the transporting hangers (20).

18. Apparatus, in particular according to Claim 10 and one or more of the further claims, characterized by a removal-conveyor system for conveying away empty transporting hangers (20) from the handling device to the preliminary conveyor (29), which system preferably exhibits at least one removal conveyor (63), a connecting conveyor (64) and a turning member preferably designed as a turning conveyor (65).

19. Apparatus according to Claim 18, characterized in that the turning conveyor (65) is guided in an at least 180° loop from the removal conveyor (63) to the connecting conveyor (64), and preferably merges in a joint-free manner with the connecting conveyor (64) located directly downstream of it.

20. Apparatus according to Claim 19, characterized in that the removal conveyor (63) exhibits a gripping head (72) with at least one movable carrying pin (79) for receiving a hook (26) or the like of the respective transporting hanger (20).

21. Apparatus according to one or more of Claims 18 to 20, characterized in that the turning conveyor (65) is assigned an extension (82) which can be moved back and forth and extends the turning conveyor (65) for the transfer of a transporting hanger (20) from the removal conveyor (63).

22. Apparatus according to Claim 18 and one or more of the further claims, characterized by an intermediate conveyor (95) which permanently intersects an end region of the removal conveyor (63) and is preferably guided up to the connecting conveyor (64).

23. Apparatus according to Claim 10 and one or more of the further claims, characterized in that at least the feed conveyors (30, 31), the connecting conveyor (64), the turning conveyor (65), the intermediate conveyor (95) and the turning loops (37, 42) are designed as a gravity conveyor which, in particular, exhibits a tubular conveying path and runs in an inclined manner.

## Revendications

1. Procédé d'amenée de pièces de vêtement, suspendues à des cintres de transport (20) à un dispositif de traitement, en particulier un robot de pliage (21), les pièces de vêtement étant amenées accrochées sur les cintres de transport (20) du dispositif de traitement et les cintres de transport (20) vides étant évacués après transfert au dispositif de traitement, caractérisé en ce que certaines pièces de vêtement sont amenées, par rotation des cintres de transport (20) en des positions relatives alternées du dispositif de traitement, et, après transfert des pièces de vêtement au dispositif de traitement, les cintres de transport (20) vides sont de nouveau placés dans une même position relative les uns par rapport aux autres, en plaçant les cintres de transport (20) ayant été tournés avant transfert dans une position identique à celle des autres cintres de transport (20).

2. Procédé selon la revendication 1, caractérisé en ce que les cintres de transport (20), amenés dans la même orientation sur un prétransporteur (29), sont dirigés, avec les pièces de vêtement pendant dessus, par différents transporteurs d'amenée (30, 31), tous les cintres de transport (20) se trouvant sur un transporteur d'amenée (31) étant tournés, avec les pièces de vêtement, d'un angle valant, de préférence, 180°, avant la continuation du transport vers le dispositif de traitement.

3. Procédé selon la revendication 1 ou 2, caractérisé en ce que les cintres de transport (20) ou les pièces de vêtement pendant dessus sont codés et dirigés, en fonction de ce codage, du prétransporteur (29) à l'un ou l'autre des transporteurs d'amenée (30, respectivement 31).

4. Procédé selon la revendication 1, ainsi qu'une ou plusieurs des autres revendications, caractérisé en ce que, derrière le dispositif de traitement, les cintres de transport (20) ayant été au préalablement tournés et étant à présent vides sont rappelés par rotation dans la zone du transfert, d'un transporteur (63) à l'autre transporteur.

5. Procédé selon l'une ou plusieurs des revendications 1 à 4, caractérisé en ce que, après pose et au moins partiellement maintien de chaque pièce de vêtement sur le dispositif de traitement des cintres de transport (20) correspondants, les cintres sont quelque peu abaissés puis les bras de cintre (23) des cintres de transport (20) sont refermés par rabattement pour être sortis de la pièce de vêtement.

6. Procédé selon la revendication 5, caractérisé en ce que, après abaissement du cintre de transport (20), un organe de blocage (28), associé aux bras de cintre (23), est actionné pour produire la fermeture par rabattement automatique des bras de cintre (23) puis le cintre de transport (20) spécifique est sorti de la pièce de vêtement.

7. Procédé selon la revendication 5 ou 6, caractérisé en ce que les cintres de transport (20) sont placés, avant sortie de la pièce de vêtement, de préférence après fermeture par rabattement des bras de cintre (23), en une position dans laquelle les axes longitudinaux des cintres de transport (20) s'étendent légèrement obliquement par rapport au plan de travail (46) du dispositif de traitement.

8. Procédé selon la revendication 7, caractérisé en ce que les cintres de transport (20) sont placés dans une position par rapport au plan de travail (46) dans laquelle des extrémités libres des bras de cintre (23) fermés par rabattement prennent appui sur la couche, appuyant sur le plan de travail (46) du dispositif de traitement, de pièces d'habillement et la couche, s'écartant du plan de travail (46), étant écartée par le cintre de transport (20) vis-à-vis du plan de travail (46) d'une distance faisant que seule la couche, tournée vers le plan de travail (46), de pièces d'habillement est fixée sur le plan de travail (46).

9. Procédé selon la revendication 5, ainsi que selon l'une ou plusieurs des autres revendications, caractérisée en ce que les cintres de transport (20) vides, ayant les bras de cintre (23) fermés par rabattement, sont déplacés pour être sortis des pièces d'habillement, le long d'une trajectoire en arc de cercle, de préférence par un pivotement du transporteur (32) menant les pièces d'habillement aux dispositifs de traitement.

10. Dispositif d'amenée de pièces d'habillement accrochées à des cintres de transport (20), à un dispositif de traitement, en particulier un robot de pliage (21) avec au moins un système transporteur d'amenée, menant au dispositif de traitement, caractérisé en ce que le système transporteur d'amenée présente au moins un prétransporteur (29) et plusieurs transporteurs d'amenée (30, 31) guidés en un transporteur de transfert (32) commun, au moins à un transporteur d'amenée (31) étant associé un organe de retournement (37, 42), destiné à retourner de façon forcée les cintres de transport (20), passant dans ce transporteur d'amenée (31) et ayant les pièces d'habillement accrochées à eux.

11. Dispositif selon la revendication 10, caractérisé en ce que l'organe de retournement est réalisé sous forme d'une boucle de retournement (42) qui est disposée de préférence dans la zone du transfert des cintres de transport (20), entre le prétransporteur (29) et le transporteur d'amenée (31).

12. Dispositif selon la revendication 10, caractérisé en ce que l'organe de retournement est réalisé sous forme de boucle de retournement (37), qui est intégrée dans le trajet suivi par le transporteur d'amenée (31) correspondant et est constituée en particulier de deux zones arquées (38, 39) superposées et se chevauchant partiellement et présentant globalement un développement sur 180°.

13. Dispositif selon la revendication 10, ou l'une ou plusieurs des autres revendications, caractérisé en ce que le transporteur de transfert (32) est réalisé sous forme de transporteur se déplaçant dans un sens et dans l'autre, en particulier sous forme de vérin (43) à tige de piston libre, avec au moins un crochet de transport (44) pour le cintre de transport (20) respectif.

14. Dispositif selon la revendication 13, caractérisé en ce que le transporteur de transfert (32), respectivement le vérin (43) à tige de piston libre, s étend, par rapport à son axe longitudinal, sous un angle aigu faisant, de préférence, 70 à 80° par rapport à une plaque de travail (46) du dispositif de traitement.

15. Dispositif selon la revendication 13 ou 14, caractérisé en ce que le transporteur de transfert (32) est réglable de manière qu'au moins son extrémité libre (54) tournée vers le dispositif de traitement débouche à différents niveaux devant le dispositif de traitement.

16. Dispositif selon la revendication 13, ainsi que l'une ou plusieurs des autres revendications, caractérisé en ce que le transporteur de transfert (32), respectivement le vérin (43) à tige de piston libre est susceptible de pivoter autour d'une extrémité (48) s'écartant du dispositif de traitement.

17. Dispositif selon la revendication 13, ainsi que l'une ou plusieurs des autres revendications, caractérisé en ce qu'une extrémité libre (54), associée au dispositif de traitement, du transporteur de transfert (32) est associé à un organe de déclenchement (59) destiné à déverrouiller les bras de cintre (23) des cintres de transport (20).

18. Dispositif, en particulier selon la revendication 10, ainsi que l'une ou plusieurs des autres revendications, caractérisé par un système transporteur d'évacuation pour les cintres de transport (20) vides, allant du dispositif de traitement au prétransporteur (29), présentant de préférence au moins un transporteur d'évacuation (63), un transporteur de liaison (64) et un organe de retournement réalisé de préférence sous forme de transporteur de retournement (65).

19. Dispositif selon la revendication 18, caractérisé en ce que le transporteur de retournement (65) est guidé en une boucle d'au moins 180°, sur le trajet allant du transporteur d'évacuation (63) au transporteur de liaison (64) et de préférence se transforme sans coupure en le transporteur de liaison (64) placé directement derrière.

20. Dispositif selon la revendication 19, caractérisé en ce que le transporteur d'évacuation (63) présente une tête de prise (72), avec au moins une tige support (79) mobile destinée à recevoir un crochet (26), ou analogue, du cintre de transport (20) respectif.

21. Dispositif selon l'une ou plusieurs des revendications 18 à 20, caractérisé en ce qu'au transporteur de retournement (65) est associé un prolongement (82) susceptible de se déplacer dans un sens et dans l'autre, prolongeant le transporteur de retournement (65) en vue du transfert d'un cintre de transport (20) depuis le transporteur d'évacuation (63).

22. Dispositif selon la revendication 18 ou l'une ou plusieurs des autres revendications, caractérisé par un transporteur intermédiaire (95), croisant en permanence une zone d'extrémité du transporteur d'évacuation (63) et amené de préférence au transporteur de liaison (64).

23. Dispositif selon la revendication 10, ainsi que l'une ou plusieurs des autres revendications, caractérisé en ce qu'au moins les transporteurs d'amenée (30, 31), le transporteur de liaison (64), le transporteur de retournement (65), le transporteur intermédiaire (95) et les boucles de retournement (37, 42) sont réalisés sous forme d'un transporteur par gravité, présentant en particulier une piste transporteuse tubulaire, ayant une allure inclinée.
